# EUROPÄISCHE PATENTANMELDUNG

(11) **EP 4 243 040 A1**
(43) Veröffentlichungstag der Anmeldung: **13.09.2023**
(21) Anmeldenummer: 22161486.0
(22) Anmeldetag: 10.03.2022
(51) Int. Cl.: H01F 1/01, F25B 21/00

(54) **VERFAHREN ZUM HERSTELLEN EINES MAGNETOKALORISCHEN WÄRMETAUSCHERELEMENTS**

(71) Anmelder: Magnotherm Solutions GmbH, 64287 Darmstadt (DE)
(72) Erfinder: Münch, Falk, 64293 Darmstadt (DE); Rocabert, Ulysse, 64285 Darmstadt (DE); Fries, Maximilian, 63743 Aschaffenburg (DE)
(74) Vertreter: Tergau & Walkenhorst Patentanwälte PartGmbB

(57) **Zusammenfassung**

Die Erfindung betrifft ein kostengünstiges, ressourcenschonendes, einfach durchzuführendes, möglichst ungefährliches und fehlertolerantes Verfahren, mit dem ein langlebiges, robustes, chemisch und mechanisch stabiles Wärmetauscherelement mit vorteilhaften thermohydraulischen und magnetischen Eigenschaften hergestellt werden kann. Erfindungsgemäß umfasst das Verfahren folgende Schritte:
• Bereitstellen eines magnetokalorischen Substrats (10) mit einer Mehrzahl von Poren, die durchgängige Kanäle (12) bilden,
• Eintauchen des Substrats (10) in eine temperierte wässrige Reaktionslösung (6), die zu einer autokatalytisch-chemischen Abscheidung einer Metallbeschichtung (40) auf der Oberfläche des Substrats (10) führt.

## Beschreibung

Die Erfindung betrifft ein Verfahren zum Herstellen eines magnetokalorischen Wärmetauscherelements. Sie betrifft außerdem ein nach einem derartigen Verfahren hergestelltes Wärmetauscherelement sowie eine Wärmepumpe oder Kühl- oder Heizvorrichtung mit einem derartigen Wärmetauscherelement. Die Erfindung betrifft ferner eine Abscheidungslösung auf Nickelbasis sowie eine Abscheidungslösung auf Kupferbasis, insbesondere zur Verwendung in dem genannten Verfahren.

Die ökonomisch verwertbare Hebung der theoretisch zu erwartenden Energieeffizienzgewinne beim Einsatz magnetokalorischer Materialien in Wärmepumpen und Kühlvorrichtungen setzt neben der Wahl eines leistungsfähigen, auf den angestrebten Temperaturbereich zugeschnittenen und angemessen kostengünstigen Funktionsmaterials ein geeignetes Design des magnetokalorischen Wärmetauschers voraus. Dieses betrifft sowohl die Zusammensetzung, das Gefüge und die Architektur des magnetokalorischen Wärmetauschers. So sind z. B. Eigenschaften wie ein geringer Strömungswiderstand, eine hohe Volumendichte an magnetokalorischem Material, eine hohe Entropieänderung während des magnetischen Phasenübergangs, eine Herstellung aus günstig verfügbaren Rohstoffen, eine effektive Wärmeübertragung und eine große Langlebigkeit erstrebenswert. Letztere erfordert eine hohe mechanische und chemische Stabilität unter Betriebsbedingungen, d. h. in Anwesenheit des Wärmetauschmediums und der im Gerätebetrieb auftretenden Kräfte. Dies sind insbesondere die Strömung des Wärmetauschermediums, die magnetische Anziehung und die durch wiederholte (De-)Magnetisierung und der damit verbundenen Phasenumwandlungen verursachten Volumenänderungen.

Der Fokus auf günstige Rohstoffe geringer Kritikalität macht magnetokalorische Materialien besonders vielversprechend, die vornehmlich aus gut verfügbaren Übergangs- oder Hauptgruppenmetallen sowie aus dem vergleichsweise unkritischen Seltenerdmetall Lanthan aufgebaut sind. Hervorzuhebende Materialklassen umfassen Heusler-Verbindungen, Fe₂P-basierte magnetokalorische Verbindungen sowie Lanthan-Eisen-Silicium-basierte Legierungen, bei denen hydrogenierte Varianten aufgrund ihrer erhöhten Curie-Temperatur und ihrer hohen Leistungsdichte für Kühlanwendungen unter Umgebungsbedingungen besonders interessant sind. Durch Einstellung der Zusammensetzung kann der ideale Nutzungsbereich magnetokalorischer Verbindungen wie beispielsweise Lanthan-Eisen-Silicium-basierte Legierungen deutlich gesenkt werden, sodass solche Materialklassen auch für Tieftemperanwendungen relevant sind.

Die erforderliche Kombination der oben genannten zahlreichen Eigenschaften ist bei magnetokalorischen Vollmaterialien nicht befriedigend zu erreichen. Zum Beispiel sind diese aufgrund ihres Aufbaus aus oxophilen, mäßig bis stark unedlen (z. B. Lanthan) sowie schlecht passivierenden Metallen (z. B. Eisen) intrinsisch korrosionsempfindlich, und die Bindungsstruktur von intermetallischen Materialien wie Lanthan-Eisen-Silicium-Mangan-Legierungen und Heusler-Verbindungen oder von Eisenphosphiden macht diese intrinsisch spröde und bruchempfindlich. Lanthan-Eisen-Silicium-Mangan-Legierungen, die zur Einstellung ihrer magnetischen Eigenschaften hydrogeniert wurden, verlieren durch Ausdiffusion bereits bei moderat erhöhten Temperaturen von unter 100 °C Wasserstoff, was zu einer unerwünschten Änderung ihrer magnetischen Funktionalität führt. Um die Curie-Temperatur herum, die bei den primär angestrebten Anwendungen im Bereich der Raumtemperatur und darunter liegt, führt bereits eine partielle Dehydrogenierung zu einer drastisch beschleunigten Migration des im Gitter verbleibenden Wasserstoffs, was die kommerzielle Nutzung teilhydrogenierte Lanthan-Eisen-Silicium-Legierungen aufgrund beschleunigter Alterung und Leistungsverlust ausschließt. Daher sind solche Substrate inkompatibel mit Abscheidungsmethoden oder Modifikationsprozessen, die auf erhöhte Temperaturen angewiesen sind, wie z. B. Sinterbehandlungen, die zur Verringerung von Beschichtungsspannungen, zur Interdiffusion von Grenzschichten, und zur Verbesserung der Adhäsion oder zum Verbinden granularer Ausgangsstoffe eingesetzt werden.

Aufgrund der hohen chemischen Reaktivität gestaltet sich die beschädigungsfreie Verarbeitung und Modifikation solcher Materialien herausfordernd. So führt Korrosion in Gegenwart organischer oder wasserbasierter Kühlmedien zum Verlust an Aktivmaterial und je nach umgebendem pH-Wert zum Aufbau oxidischer, hydroxydischer oder löslicher Oxidationsprodukte. Feste Korrosionsprodukte können in den Kühlkreislauf übergehen oder anhaften und einen Verlust an Wärmeleitfähigkeit und eine Verschlechterung der Strömungseigenschaften verursachen. In nasschemischen Beschichtungsverfahren wie der Elektrodeposition konkurriert die erwünschte Beschichtungsreaktion mit denselben Korrosionsprozessen, welche in diesem Szenario die Schichtqualität und -anhaftung negativen beeinflussen können.

Aufgabe der Erfindung ist es, ein kostengünstiges, ressourcenschonendes, einfach durchzuführendes, möglichst ungefährliches und fehlertolerantes Verfahren anzugeben, mit dem ein langlebiges, robustes, chemisch und mechanisch stabiles Wärmetauscherelement mit vorteilhaften thermohydraulischen und magnetischen Eigenschaften hergestellt werden kann. Insbesondere sind ein geringer Strömungswiderstand für ein hindurch strömendes Wärmetransfermedium, eine hohe Volumendichte an magnetokalorischem Material, eine hohe Entropieänderung während des magnetischen Phasenübergangs, eine effektive Wärmeübertragung sowie eine hohe Material- und Korrosionsstabilität unter Anwendungsbedingungen, insbesondere in wasserbasierten Wärmetauschermedien sowie unter Vermeidung von Wasserstoffversprödung oder -verlust, wünschenswert. Des Weiteren soll eine zur Durchführung des Verfahrens geeignete Abscheidungslösung, einerseits auf Nickelbasis und andererseits auf Kupferbasis, angegeben werden.

Die Aufgabe wird erfindungsgemäß gelöst durch ein Verfahren mit den Merkmalen des Anspruchs 1. Das entsprechende Wärmetauscherelement ist Gegenstand von Anspruch 15. Zur Durchführung des Verfahrens geeignete Abscheidungslösungen sind in den Ansprüchen 17 und 18 angegeben.

Das erfindungsgemäße Verfahren zum Herstellen eines magnetokalorischen Wärmetauscherelements umfasst demnach folgende Schritte:
- Bereitstellen eines magnetokalorischen Substrats mit einer Mehrzahl von Poren, die durchgängige Kanäle bilden,
- Eintauchen des Substrats in ein eine temperierte wässrige Reaktionslösung, die zu einer autokatalytisch-chemischen Abscheidung einer Metallbeschichtung auf der Oberfläche des Substrats führt.

Das Substrat wird auch als Matrix bezeichnet. Die Reaktionslösung wird auch als Abscheidungslösung bezeichnet. Synonym wird hier auch der Begriff Abscheidungsbad verwendet.

Das Wärmetauscherelement wird auch Wärmeübertragerelement oder Regeneratorelement genannt. Auch Kurzbezeichnungen wie Wärmetauscher, Wärmeübertrager oder Regenerator sind gebräuchlich.

Der Begriff ,magnetokalorisch' bezeichnet in der vorliegenden Anmeldung im Einklang mit dem fachüblichen Verständnis die Eigenschaft, dass das Substrat einen technisch verwertbaren magnetokalorischen Effekt zeigt. Darunter versteht man das Phänomen einer Temperaturänderung in einem magnetisierbaren Material, wenn es einem sich ändernden Magnetfeld ausgesetzt wird.

Durchgängige oder durchgehende Kanäle sind derart zu verstehen, dass sie das Wärmetauscherelement gewissermaßen von einem Ende zu einem anderen Ende, insbesondere vollständig, durchsetzen. Der jeweilige Kanal hat also zwei offene Enden, wobei die eine Öffnung in einem ersten Oberflächenbereich des Wärmetauscherelements liegt und die zweite Öffnung in einem zweiten, vom ersten Oberflächenbereich verschiedenen Oberflächenbereich. Der jeweilige Kanal ist damit von der einen Öffnung (Eintrittsöffnung) zur anderen Öffnung (Austrittsöffnung) hin von einem Fluid, insbesondere einer Flüssigkeit, durchströmbar, wobei die Strömungsrichtung in Abhängigkeit von den Druckverhältnissen auch umkehrbar ist. Vorzugsweise sind die durch die Poren gebildeten Kanäle in ihrer Gesamtheit derart angeordnet, dass sie eine gerichtete Durchströmung des Wärmetauscherelements entlang einer Hauptströmungsrichtung oder entgegengesetzt dazu ermöglichen.

Angesichts der weiter unten genannten bevorzugten Dimensionen werden die Poren oder Kanäle auch als Mikrokanäle bezeichnet.

Mit ,Beschichtung der Oberfläche' ist hier die Beschichtung der gesamten innen und äußeren Oberfläche des Substrats gemeint, die beim späteren Einsatz als Wärmetauscherelement mit dem Wärmetransfermedium in Kontakt kommen kann. Insbesondere sollen die Wände der Poren oder Kanäle beschichtet werden.

Die Erfindung geht von der Überlegung aus, dass massiv ausgeführte magnetokalorische Regeneratoren aufgrund ihrer mäßigen Wärmeleitfähigkeit schlecht für einen effektiven Wärmeaustausch mit dem umgebenden Medium geeignet sind. Stattdessen verfolgt die vorliegende Erfindung den Ansatz, durch die Einbringung einer geeigneten Porenarchitektur eine gut zugängliche und große innere Oberfläche zu erzeugen. Dies intensiviert zwar den Wärmeaustausch, steigert aber gleichzeitig die Herausforderungen in Betrieb und Verarbeitung: So verschärft eine vergrößerte, mit dem Kühlmedium in Kontakt stehende Oberfläche die Korrosionsproblematik, die gesteigerte geometrische Komplexität poröser magnetokalorischer Materialien stellt zusätzlich zur Vermeidung unerwünschter Nebenreaktionen hohe Anforderungen an die Konformität und Homogenität der in Frage kommenden Beschichtungstechniken, und aufgrund ihrer Dimensionierung sind die feingliedrigen Kanäle besonders anfällig gegenüber einer Blockade durch feste Korrosionsprodukte.

Wie im Rahmen der Erfindung erkannt wurde, sind als technologische Lösung zur Erstellung leistungsfähiger, preislich kompetitiver und robuster magnetokalorischer Wärmetauscher effektive Beschichtungstechniken erstrebenswert, die in der Lage sind, poröse Ausführungen magnetokalorischer Materialien degradationsfrei, kontrolliert und gleichmäßig mit einem Zweitmaterial zu bedecken, das durch seine oberflächlich eingebrachte Funktionalität die Eigenschaften des Substrats ergänzt und dessen Schwächen kompensiert. So erhöht die Einhüllung eines magnetokalorischen Materials in eine steife und plastisch verformbare Beschichtung dessen Bruchresistenz und verringert die Gefahr der phasenwechselinduzierten Pulverisierung, während eine vollständige Bedeckung der Oberfläche mit einem chemisch resistenteren Material dessen Korrosionsbeständigkeit und Alterungsstabilität verbessert. Um die thermische Masse des Systems nicht unnötig zu erhöhen und um den effektiven Wärmetransport vom magnetokalorischen Material in das umgebende Kühlmedium als zentrale Leistungsgröße nicht zu gefährden, sind hierfür dünne und schlecht thermisch isolierende Beschichtungen wünschenswert.

In ihrer Summe können die erforderlichen Eigenschaften (insbesondere hohe Korrosionsbeständigkeit unter Betriebsbedingungen, mechanischer Schutz des magnetokalorischen Materials, Duktilität, hohe Wärmeleitfähigkeit) vor allem durch Metallbeschichtungen realisiert werden. Diese oberflächenkonform, defektfrei und gut haftend auf komplex geformte, chemisch und physikalisch empfindliche magnetokalorische Substrate mit großen inneren Oberflächen aufzubringen ist anspruchsvoll, kann aber mit maßgeschneiderten autokatalytisch-chemischen Metallabscheidungsprozessen erreicht werden, die der spezifischen Reaktivität magnetokalorischer Materialien, ihrer Geometrie und der angestrebten Kombination an Zieleigenschaften Rechnung tragen, wie im Folgenden näher aufgeführt wird.

Das erfindungsgemäß behandelte Substrat eignet sich besonders für magnetokalorische Anwendungen, insbesondere in Kühlvorrichtungen, mit wasserbasierten Wärmetauschermedien. Derartige Wärmetauschermedien sind ökologisch vorteilhaft, besitzen gute physikalische und chemische Leistungsdaten (sehr hohe Wärmekapazität, hohe Wärmeleitung, relativ geringe Viskosität) und sind kostengünstig in großen Mengen verfügbar. Im Gegensatz zu aprotischen organischen Lösungsmitteln oder vergleichbaren nichtwässrigen Kältemedien sind diese allerdings korrosiv, was die Notwendigkeit des erfindungsgemäßen Schutzes des magnetokalorischen Funktionsmaterials vor chemischen Angriffen begründet.

Vorteilhafte Ausbildungen der Erfindung, die zum Teil eigenständig erfinderischen Charakter haben, sind Gegenstand der abhängigen Ansprüche in Verbindung mit der nachfolgenden Beschreibung.

Vorteilhafterweise ist das Substrat monolithisch (im Sinne von einstückig, integral, zusammenhängend) und vorzugsweise gleichmäßig von durchgängigen Poren durchzogen. Bevorzugt sind die Poren im Wesentlichen geradlinig und parallel zueinander ausgerichtet, so dass eine Mehrzahl, insbesondere eine Vielzahl, strömungsmäßig parallel geschalteter Kanäle ausgebildet ist. Gekrümmte Kanäle, die die Strömungsrichtung umlenken, um den Wärmeaustausch auf Kosten der Reibung intensivieren, sind aber ebenfalls von der Erfindung umfasst.

Bevorzugt ist es, wenn die Poren einen Durchmesser zwischen 200 und 1000 µm aufweisen, vorzugsweise monodispers sind und entlang ihres Verlaufs bevorzugt einen konstanten Durchmesser aufweisen, und/oder wobei zwischen den Poren Wände ausgebildet sind, deren Wanddicke weniger als 1000 µm, vorzugsweise weniger als 600 µm, beträgt. Im Falle von Poren mit nicht kreisförmigem Querschnitt ist der Begriff ,Durchmesser' in einem allgemeinen Sinne als Ausdehnung entlang einer Querschnittsrichtung zu verstehen. Der Durchmesser der Kanäle kann aber auch in Längsrichtung variieren. Insbesondere können Stufungen oder Versätze vorhanden sein.

Vorteilhafterweise liegt der der Volumenanteil der Poren des Substrats im Bereich von 10 bis 60 %, vorzugsweise von 20 bis 55 %, des Gesamtvolumens.

Bevorzugt besteht das Substrat aus einem Material, welches auf einem Metall oder einer Metalllegierung aus der Gruppe der Übergangs- oder Hauptgruppenmetalle oder auf dem Seltenerdmetall Lanthan basiert. Besonders bevorzugt ist das Substrat eine Heusler-Legierung, eine magnetokalorische Verbindung des Eisenphosphid-Typs oder eine Lanthan-Eisen-Silicium-basierte Legierung, insbesondere eine hydrogenierte Lanthan-Eisen-Silicium-Mangan-Legierung.

Vorteilhafterweise weist das Abscheidungsbad eine Temperatur im Bereich von 20 bis 90 °C, vorzugsweise von weniger als 60 °C, auf. Die Metallbeschichtung erfolgt dabei bevorzugt in einer Weise, dass die Schutzwirkung und Stabilität der abgeschiedenen Schicht nicht auf Behandlungen bei erhöhter Temperatur, insbesondere über 90 °C (wie z. B. Sinterbehandlungen), angewiesen ist. Mit anderen Worten wird bevorzugt in keinem Moment während der Metallbeschichtung und während einer etwaigen Vorbehandlung vor der Beschichtung und/oder während einer Nachbehandlung nach der Beschichtung des Substrats eine Temperatureinwirkung von 90 °C auf das Substrat überschritten. Bevorzugt werden sogar 60 °C nicht überschritten.

Bevorzugt ist es, wenn die gesamte Oberfläche des Substrats, insbesondere die im Inneren liegenden Oberflächen der Porenwände, während des Abscheidungsvorgangs ständig in Kontakt mit frischer Reaktionslösung steht, realisiert durch die Durchströmung der Poren mit der Reaktionslösung, wobei das Substrat während des Abscheidungsvorgangs zumindest zeitweilig, vorzugsweise die meiste Zeit, derart ausgerichtet wird, dass sich bei der Abscheidung bildende Wasserstoffblasen selbstständig aus den Poren entfernen. Die wird insbesondere erreicht durch eine bevorzugte vertikale oder schräge Ausrichtung der Poren, oder durch vorzugsweise konstante Rotation des Substrats in der Lösung. Im äußeren Teil des Substrats werden Kontaktflächen, die z. B. durch Aufliegen oder Befestigungen zu Stande kommen, bevorzugt sowohl in ihrem Umfang als auch ihrer Dauerhaftigkeit durch Wahl einer möglichst geringen Zahl und Größe und/oder durch regelmäßiges Wenden oder Bewegen minimiert. Mit anderen Worten werden konstante Kontaktpunkte, eine Aufstauung von Gasblasen sowie eine Stagnation der Reaktionslösung im Inneren des Substrats vermieden. Somit wird eine gleichmäßige Beschichtung überall auf der Substratoberfläche durch ständigen Kontakt mit frischer, unverbrauchter Reaktionslösung sichergestellt. Eine bevorzugte Ausführung dieser Durchführung stellen flächig verbundene Gitterkörbe dar, in die einzelne Mikrokanäle gestellt werden, die durch regelmäßiges, nicht notwendigerweise konstantes Rütteln in ihrer Positionierung verändert werden.

In einem bevorzugten Spezialfall der Rotationsmethode wird das Substrat während des Abscheidungsvorgangs in einem rotierend im Abscheidungsbad gelagerten Aufnahmezylinder aufbewahrt und gedreht. Der Aufnahmezylinder weist bevorzugt eine mit Durchströmöffnungen für die Reaktions- bzw. Abscheidungslösung versehene Mantelfläche auf.

In einer ersten vorteilhaften Variante ist das Abscheidungsbad ein Nickel-Phosphor-Abscheidungsbad, welches bevorzugt folgende Inhaltsstoffe umfasst:
- eine Ni(II)-Quelle, vorzugsweise Nickelsulfat
- Liganden, vorzugsweise Citrat und/oder andere Carbon-, Hydroxycarbon- oder Aminopolycarbonsäuren, bevorzugt in einem Molaritätsverhältnis von etwa 6:1 bis 10:1, gemessen in auf die vom Liganden bereitgestellt Anzahl an Ni(II)-Bindungsstellen, bezogen auf Ni(II)
- Alkalien, vorzugsweise Ammoniak und/oder Ammoniumsalze wie Ammoniumsulfat, besonders bevorzugt Ammoniak ergänzt um ein Ammoniumsalz
- ein katalytisch umsetzbares Reduktionsmittel, vorzugsweise Hypophosphite wie Kalium-, Natrium- und/oder Ammoniumhypophosphit, und/oder Hydrazin, Borhydrid und/oder Aminoborane, bevorzugt in einem Molaritätsverhältnis von etwa 2:1 bis 3:1, bezogen auf Ni(II)
- optional Stabilisatoren, vorzugsweise Pb(II)-Salze wie Bleiacetat
- optional oberflächenaktive Verbindungen, vorzugsweise anionische Tenside wie Natrium- und/oder Kaliumseifen, Organosulfonate und/oder -sulfate, und/oder neutrale Tenside wie Polysorbate

In einer zweiten vorteilhaften Variante ist das Abscheidungsbad ein Kupfer-Abscheidungsbad, welches bevorzugt folgende Inhaltsstoffe umfasst:
- eine Cu(II)-Quelle, vorzugsweise Kupfersulfat
- Liganden, vorzugsweise Tartrat und/oder andere Carbon-, Hydroxycarbon- oder Aminopolycarbonsäuren, bevorzugt in einem Molaritätsverhältnis von etwa 5:1 bis 10:1, gemessen in auf die vom Liganden bereitgestellte Anzahl an Cu(II)-Bindungsstellen, bezogen auf Cu(II)
- Alkalien, vorzugsweise Alkalimetallhydroxide und -carbonate oder deren Mischungen, wie Natriumhydroxid, Kaliumhydroxid oder Natriumcarbonat
- ein katalytisch umsetzbares Reduktionsmittel, vorzugsweise Formaldehyd, und/oder Glyoxylsäure und andere Aldehyde, bevorzugt in einem Molaritätsverhältnis von etwa 2:1 bis 3:1, bezogen auf die für die vollständige Reduktion des Cu(II) benötigte Zahl an molaren Äquivalenten
- optional oberflächenaktive, vorzugsweise anionische Tenside wie Natrium- oder Kaliumseifen, Organosulfonate und/oder -sulfate, und/oder neutrale Tenside wie Polysorbate
- optional Additive, vorzugsweise Cyanide wie Natriumcyanid und/oder stickstoffbasierte Heterozyklen wie Polypyridine und/oder Azole
- optional Stabilisatoren, vorzugsweise Oxo-Anionen, Schwefelverbindungen und/oder Heterozyklen
- optional Ni(II)-Salze, vorzugsweise Nickelsulfat, bevorzugt in einem Molaritätsverhältnis von etwa 1:4 bis 1:8, bezogen auf Cu(II)

Zur Unterstützung der Abscheidungsreaktion wird die Abscheidungslösung während des Abscheidungsvorgangs vorteilhafterweise mit Sauerstoff angereichert, insbesondere mit eingeleiteten Luftblasen (Druckluft) oder anderen sauerstoffhaltigen Gasen oder Gasgemischen bzw. entsprechenden Gasblasen gespült. Dadurch wird vorteilhafterweise auch eine Umwälzung der Lösung im Abscheidungsgefäß initiiert oder unterstützt.

Ein besonderer Vorteil des erfindungsgemäßen Verfahrens ist, dass die Metallabscheidung auf dem Substrat spontan, insbesondere ohne vorige Einbringung katalytisch aktiver Komponenten wie zum Beispiel Palladium-Partikel, im Submikrometerbereich gleichmäßig deckend und innerhalb von weniger als 10 Minuten, vorzugsweise innerhalb weniger als 2 Minuten, einsetzt.

Um das Einsetzen der Abscheidungsreaktion zu fördern, kann es vorgesehen sein, dass der Abscheidungsvorgang optional durch Anlegen einer elektrischen Spannung an das Substrat oder durch galvanischen Kontakt des Substrats mit einem Metall, insbesondere Kupfer, unterstützt wird. Vorteilhafterweise wird zwar auf derartige Unterstützungsmaßnahmen verzichtet, was den apparativen Aufwand verringert und die Prozessführung vereinfacht, aber jedenfalls ist das erfindungsgemäße Verfahren damit kompatibel oder verträglich, falls in speziellen Fällen gewünscht oder vorteilhaft.

Vorteilhafterweise wird die Abscheidungsdauer derart gewählt, dass eine Schichtdicke der Metallbeschichtung im Bereich von 3 bis 50 µm, vorzugsweise 10 bis 30 µm, erzielt wird.

Vorteilhafterweise wird das Substrat vor dem Abscheidungsvorgang in/mit einem organischen Lösungsmittel, insbesondere N-Methylpyrrolidon, Isopropanol, Ethanol oder Aceton, gereinigt und dann ggf. getrocknet. Bevorzugt ist darüber hinaus keine weitere Vorbehandlung des Ausgangswerkstücks erforderlich.

Vorteilhafterweise wird das beschichte Substrat nach dem Abscheidungsvorgang lediglich mit Wasser gewaschen und dann ggf. an Luft getrocknet. Bevorzugt ist darüber hinaus keine weitere Nachbehandlung des beschichteten Werkstücks erforderlich. Es kann vielmehr unmittelbar einer Verwendung als Wärmetauscherelement oder dergleichen zugeführt werden, insbesondere sind thermische Nachbehandlungen nicht erforderlich.

In einer möglichen Weiterbildung des Verfahrens wird das beschichtete Substrat nach dem Abscheidungsvorgang und ggf. nach dem Abwaschen und Trocknen in ein zweites temperiertes Abscheidungsbad mit einer zweiten autokatalytisch-chemischen Reaktionslösung eingetaucht, und zwar zur Ausbildung einer zweiten Metallbeschichtung auf der Oberfläche der zuvor erhaltenen Metallbeschichtung.

Bevorzugt wird das nach dem erfindungsgemäßen Verfahren hergestellte magnetokalorische Wärmetauscherelement in einer Wärmepumpe oder einer magnetokalorischen Kühl- oder Heizvorrichtung eingesetzt, wo es im Betrieb bevorzugt von einem wässrigen bzw. wasserbasierten Wärmetauschermedium durchströmt wird.

Neben oder anstelle von magnetokalorischen Wärmetauscherelementen können mit dem erfindungsgemäßen Verfahren auch andere Objekte aus korrosionsempfindlichen magnetokalorischen Materialien mit einer mechanisch stabilisierenden und/oder vor chemischen Angriffen schützenden Metallschicht versehen werden. Eine derartige Beschichtung bietet sich insbesondere für alle Objekte an, die während des Betriebs mit wässrigen Lösungen in Kontakt kommen, oder die bei Luftkontakt vor Oxidation geschützt werden sollen. Insofern umfasst die vorliegende Erfindung allgemein auch ein Verfahren zum Beschichten von korrosionsempfindlichen Objekten aus magnetokalorischen Materialien, die aufgrund der Konturtreue der Beschichtung beliebig geformt sein können, wobei das Objekt ein Substrat bildet, das in eine wässrige Reaktionslösung eingetaucht wird, und wobei die Reaktionslösung zu einer autokatalytisch-chemischen Abscheidung einer Metallbeschichtung auf der Oberfläche des Substrats führt. Das Verfahren eignet sich insbesondere für solche Objekte oder Substrate, die mit durchgängigen Poren oder Mikrokanälen durchzogen sind oder eine feingliedrige, poröse, granulare oder pulvrige Struktur aufweisen, wobei auch innere, gekrümmte oder teilweise verdeckte Oberflächen möglichst vollständig und homogen beschichtet werden. Aber auch eine Beschichtung der Wände von Makrokanälen ist prinzipiell möglich.

Ein weiterer Aspekt der vorliegenden Erfindung, der als eigenständig erfinderisch angesehen wird, besteht in der Bereitstellung einer wässrigen Reaktionslösung zur Herstellung einer Metallbeschichtung auf einem metallischen Substrat durch autokatalytisch-chemische Abscheidung, insbesondere zur Verwendung in einem Verfahren der oben beschriebenen Art zur Herstellung eines magnetokalorischen Wärmetauscherelements, umfassend folgende Inhaltsstoffe:
- eine Ni(II)-Quelle, vorzugsweise Nickelsulfat
- Liganden, vorzugsweise Citrat und/oder andere Carbon-, Hydroxycarbon- oder Aminopolycarbonsäuren, bevorzugt in einem Molaritätsverhältnis von etwa 6:1 bis 10:1, gemessen in auf die vom Liganden bereitgestellt Anzahl an Ni(II)-Bindungsstellen, bezogen auf Ni(II)
- Alkalien, vorzugsweise Ammoniak und/oder Ammoniumsalze wie Ammoniumsulfat, besonders bevorzugt Ammoniak ergänzt um ein Ammoniumsalz
- ein katalytisch umsetzbares Reduktionsmittel, vorzugsweise Hypophosphite wie Kalium-, Natrium- und/oder Ammoniumhypophosphit, und/oder Hydrazin, Borhydrid und/oder Aminoborane, bevorzugt in einem Molaritätsverhältnis von etwa 2:1 bis 3:1, bezogen auf Ni(II)
- optional Stabilisatoren, vorzugsweise Pb(II)-Salze wie Bleiacetat
- optional oberflächenaktive Verbindungen, vorzugsweise anionische Tenside wie Natrium- und/oder Kaliumseifen, Organosulfonate und/oder -sulfate, und/oder neutrale Tenside wie Polysorbate

Neben einer derartigen nickelbasierten Beschichtungslösung lehrt die vorliegende Erfindung auch eine entsprechende kupferbasierte Reaktionslösung, umfassend folgende Inhaltsstoffe:
- eine Cu(II)-Quelle, vorzugsweise Kupfersulfat
- Liganden, vorzugsweise Tartrat und/oder andere Carbon-, Hydroxycarbon- oder Aminopolycarbonsäuren, bevorzugt in einem Molaritätsverhältnis von etwa 5:1 bis 10:1, gemessen in auf die vom Liganden bereitgestellte Anzahl an Cu(II)-Bindungsstellen, bezogen auf Cu(II)
- Alkalien, vorzugsweise Alkalimetallhydroxide und -carbonate oder deren Mischungen, wie Natriumhydroxid, Kaliumhydroxid oder Natriumcarbonat
- ein katalytisch umsetzbares Reduktionsmittel, vorzugsweise Formaldehyd, und/oder Glyoxylsäure und andere Aldehyde, bevorzugt in einem Molaritätsverhältnis von etwa 2:1 bis 3:1, bezogen auf die für die vollständige Reduktion des Cu(II) benötigte Zahl an molaren Äquivalenten
- optional oberflächenaktive Verbindungen, vorzugsweise anionische Tenside wie Natrium- oder Kaliumseifen, Organosulfonate und/oder -sulfate, und/oder neutrale Tenside wie Polysorbate
- optional Additive, vorzugsweise Cyanide wie Natriumcyanid und/oder stickstoffbasierte Heterozyklen wie Polypyridine und/oder Azole
- optional Stabilisatoren, vorzugsweise Oxo-Anionen, Schwefelverbindungen und/oder Heterozyklen
- optional Ni(II)-Salze, vorzugsweise Nickelsulfat, bevorzugt in einem Molaritätsverhältnis von etwa 1:4 bis 1:8, bezogen auf Cu(II)

Zusammengefasst beschreibt die Erfindung autokatalytisch-chemische Abscheidungsprozesse, insbesondere für Nickel-Phosphor- und Kupferschichten, die auf magnetokalorische Materialien, insbesondere thermisch und chemisch empfindliche Verbindungen wie hydrogenierte Lanthan-Eisen-Silicium-Mangan Legierungen zugeschnitten sind. Derartige Prozesse ermöglichen schonende (insbesondere unerwünschte Korrosions-Nebenreaktionen vermeidende sowie thermisch nicht belastende), gleichmäßige und effektive Beschichtungen mit Metallfilmen, die aufgrund der ausgezeichneten Abscheidungskonformität auch auf komplexe Substratgeometrien wie die oben beschriebenen, technologisch besonders relevanten porös-monolithischen Konfigurationen aufgebracht werden können. Dies wird durch eine auf die spezifische Substratreaktivität abgestimmte Prozessführung und Zusammensetzung der Abscheidungslösungen sichergestellt.

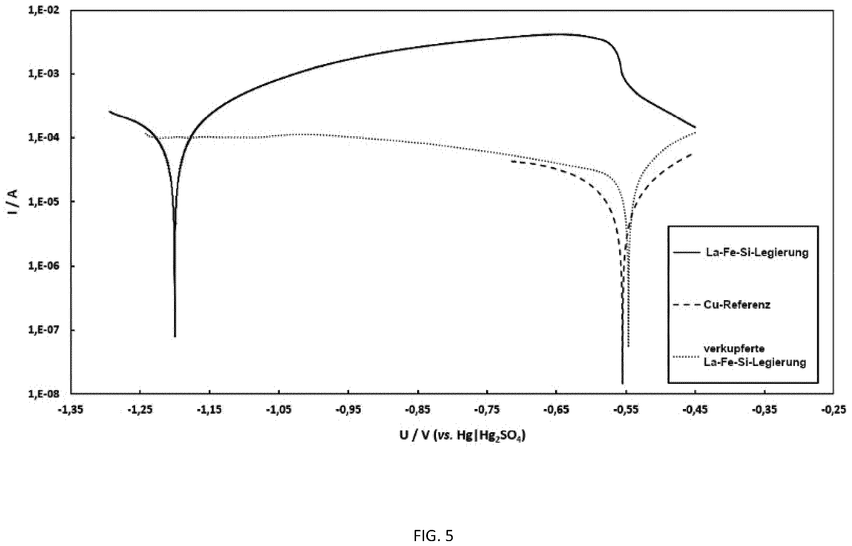

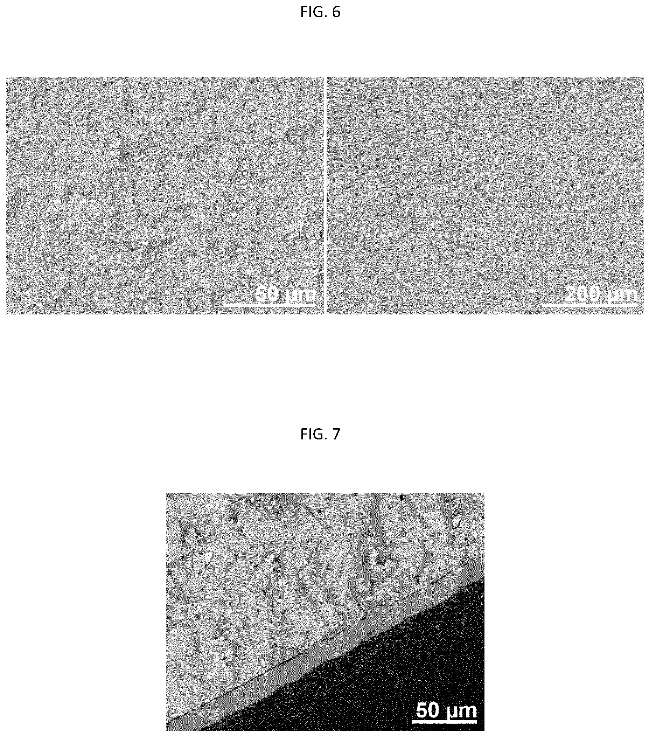

Die mit der Erfindung erzielten Vorteile sind insbesondere die Folgenden:
(i) Demonstration einer zuverlässig korrosionsschützenden autokatalytisch-chemischen Beschichtungsreaktion, insbesondere erstmalige Demonstration einer Verkupferungsreaktion, für magnetokalorische, temperaturempfindliche Materialien. So konnte mittels der Linear-Sweep-Voltammetrie eine Verschiebung des Korrosionspotenzials des aus einer hydrogenierten Lanthan-Eisen-Mangan-Silicium-Legierung bestehenden Substratmaterials um mehr als 600 mV demonstriert werden; mit diesem Wert kommt das Korrosionspotenzial in einem Bereich zu liegen, der dem des reinen Beschichtungsmetall Kupfer entspricht (FIG. 5), was eine zuverlässige Abschirmung des Substratmaterials gegenüber dem umgebenden Elektrolyten anzeigt. Begleitende rasterelektronenmikroskopische Untersuchungen bestätigen die ausgezeichnete Defektfreiheit, Konturtreue und Homogenität der Kupfer-Beschichtung (FIG. 6, FIG. 7) sowie die hohe Qualität der Grenzfläche zwischen dem magnetokalorischen Lanthan-Eisen-Mangan-Silicium-Substrat und der Kupfer-Beschichtung, die keine merklichen Oxidationsspuren aufweist, dafür eine innige Verbindung zwischen Substrat und Beschichtung (FIG. 7).
(ii) Aufgrund des spontanen und zuverlässigen Einsetzens der Metallisierungsreaktionen lediglich durch Eintauchen in die Abscheidungslösung(en) kann auf aggressive Vorbehandlungsschritte (z. B. Ätzung, Beizung, Sensibilisierung oder Aktivierung der Substratoberfläche), die das Substrat angreifen und Schwachstellen erzeugen können, an denen Korrosion verfrüht einsetzen kann (z. B. oxidische Ausfällungen, die die Anhaftung des Metallfilms verschlechtern oder die nicht vollständig bedeckt werden und Poren in der Beschichtung verursachen, oder chemisch angegriffene Stellen, die eine erhöhte Korrosionsempfindlichkeit aufweisen oder schon korrodiert sind), vollständig verzichtet werden.
(iii) Die wässrigen Abscheidungslösungen wirken auf die magnetokalorischen Substrate nur schwach korrodierend, und die schnell einsetzende und zügig zu deckenden Filmen führende Abscheidung von Metall minimiert die Zeit, in der die Substratoberfläche in direktem Kontakt mit der Lösung steht und in unerwünschten Nebenreaktionen korrodieren kann.
(iv) Aufgrund der direkten Metallisierung ohne Vorbehandlungsschritte wird die Prozessführung vereinfacht: Einsparung von Produktionszeit, Kosten, Material und Abfällen; höhere Prozess-Zuverlässigkeit durch weniger ineinandergreifende, für die Sicherstellung der Produktqualität aufeinander angewiesene Arbeitsschritte.
(v) Durch das Auslassen aggressiver Vorbehandlungsschritte in Kombination mit der Unterdrückung von Korrosion durch die Badzusammensetzung und die zügige Abdeckung der empfindlichen Oberfläche des magnetokalorischen Materials werden Beschichtungen höherer Qualität erzielt sowie Materialbeschädigungen und Schwachstellen vermieden.
(vi) Unkontrollierte Zementationsreaktionen zwischen den Metallionen in den Abscheidungsbädern (insbesondere Ni(II), Cu(II)) und dem unedlen Substrat, die sich in schlecht anhaftenden Beschichtungen, Korrosion und/oder der Bildung pulveriger oder voluminöser Reaktionsprodukte (reduziertes Ni oder Cu, oxidierte Substratkomponenten) äußern, werden vermieden.
(vii) Die Abscheidungsbäder erlauben auch bei niedrigen Abscheidungstemperaturen von idealerweise unter 60 °C, die die industriell üblichen Temperaturen autokatalytisch-chemischer Ni-P- und Cu-Abscheidungsreaktionen merklich unterschreiten, aber für die Integrität sensibler magnetokalorischer Substrate erforderlich sind, eine hohe Reaktivität, die sich in einem zügigen und spontanen Einsetzen der Abscheidungsreaktion sowie in hohen Abscheidungsraten von typischerweise 4-10 µm h⁻¹ auf diesen Substratmaterialien äußert. Die Metallabscheidung auf dem Substrat setzt spontan (insbesondere ohne Nutzung katalytisch aktiver, etwa aus Palladium bestehender Keime) innerhalb von weniger als 10 Minuten, vorzugsweise weniger als 2 Minuten, ein. Die zur Erreichung der angestrebten Schichtdicken gewählte Abscheidungsdauer ist allerdings in der Regel deutlich größer als die Onset-Zeit und beträgt typischerweise mehrere Stunden, beispielsweise 2 bis 4 Stunden.
(viii) Das erfindungsgemäße Verfahren ermöglicht die Realisierung oberflächengetreuer und gleichmäßiger (konturtreuer) Metallabscheidungen auf magnetokalorischen Substraten mit einfachen nasschemischen Mitteln. Eine komplexe Instrumentierung, hoher Energiebedarf, hoher Steuerungsbedarf, und die Notwendigkeit einer kontrollierten Reaktionsatmosphäre (wie etwa im Fall von Gasphasenreaktionen) werden vermieden. Die thermische Belastung für die Substrate wird gering gehalten.
(ix) Gegenüber alternativen Designs wie z. B. kompaktierten und gesinterten Granulaten wird durch die hier vorgeschlagene Architektur eine bessere Durchströmbarkeit des Wärmetauschers und ein günstigeres Oberfläche-Volumen-Verhältnis sichergestellt.

Ein Ausführungsbeispiel der Erfindung wird nachfolgend unter Bezugnahme auf die beigefügten Zeichnungen näher erläutert. Darin zeigen:
- FIG. 1: eine exemplarische, stark vereinfachte Ansicht eines porösen, monolithischen magnetokalorischen Substrats, hier mir einer Vielzahl durchgängiger, geradliniger, paralleler und monodisperser Poren,
- FIG. 2: eine nach Art eines Flussdiagramms gestaltete Übersicht über den Verfahrensablauf bei der Beschichtung eines derartigen Substrats,
- FIG. 3: eine schematische Darstellung einer bei der Beschichtung des Substrats eingesetzten Apparatur, hier mit einem aufrecht in einer Reaktionslösung gelagerten Mikrokanal-Substrat, und
- FIG. 4: eine schematische Darstellung eines eine Mehrzahl von Substraten während der Beschichtung aufnehmenden rotierenden Aufnahmezylinders, als Beispiel für eine alternative Substratmetallisierung mit automatisierter Probenbewegung,
- FIG. 5: eine elektrochemische Charakterisierung des Korrosionsverhaltens eines unbehandelten, hydrogenierten Lanthan-Eisen-Mangan-Silicium-Legierungssubstrats, eines solchen Substrats, das entsprechend der vorliegenden Erfindung verkupfert worden ist, sowie einer reinen Cu-Referenzprobe,
- FIG. 6: eine rasterelektronenmikroskopische Aufnahme in zwei unterschiedlichen Vergrößerungen, die ein gemäß der vorliegenden Erfindung mit Kupfer beschichtetes, aus einer hydrogenierten Lanthan-Eisen-Mangan-Silicium-Legierung bestehendes Plättchen in Aufsicht zeigt; es ist kein freiliegendes Legierungssubstrat zu erkennen, sondern lediglich der konturtreue und kompakte Kupferfilm, der die gesamte Oberfläche bedeckt, und
- FIG. 7: eine rasterelektronenmikroskopische Aufnahme der Bruchkante eines gemäß der vorliegenden Erfindung mit Kupfer beschichteten Plättchens, das aus einer hydrogenierten Lanthan-Eisen-Mangan-Silicium-Legierung besteht; das Plättchen (obere Bildhälfte) ist aufgrund seiner granularen Struktur von dem feinkristallinen Kupferfilm gut zu unterscheiden, der kompakt, homogen und innig mit ihm verbunden ist; zudem sind keine Korrosionsspuren an der Grenzfläche ersichtlich, was die Integrität des Beschichtungsprozesses bestätigt.

Die Erfindung umfasst die Realisierung einer durch eine äußerliche Metallbeschichtung mechanisch verstärkten und vor Korrosion geschützten, monolithischporösen magnetokalorischen Architektur für den Einsatz als langzeitstabiles und effektives Temperaturwandlungselement in magnetokalorischen Wärmepumpen und Kühlvorrichtungen mittels eines autokatalytisch-chemischen Abscheidungsprozesses.

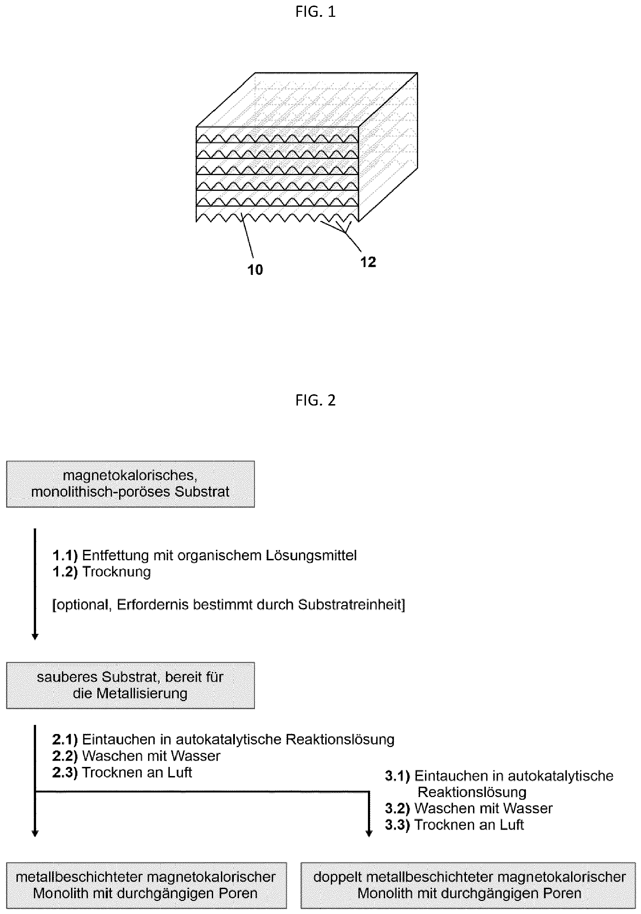

Hierfür wird ein bevorzugt monolithisches magnetokalorisches Substrat, das z. B. aus hydrogenierten Lanthan-Eisen-Silicium-Mangan-Legierungen, Heusler-Verbindungen oder Eisenphosphid-basierten magnetokalorischen Materialien besteht und das durchgängige, idealerweise parallele und monodisperse Poren aufweist, bereitgestellt. Eine Beispielstruktur ist in FIG. 1 schematisch dargestellt. Das durch das unbehandelte Substrat gebildete Ausgangsprodukt oder Vorprodukt für das gewünschte Wärmetauscherelement ist hier im Beispiel von quaderförmiger Gestalt mit einer zum Betrachter weisenden ersten Stirnseite und, gegenüberliegend, einer vom Betrachter abgewandten (nicht sichtbaren) zweiten Stirnseite. Die Poren erstrecken sich durch den Quader hindurch von der ersten zu der zweiten Stirnseite, bilden also durchgehende, parallele (Mikro-)Kanäle mit dazwischen liegenden Wänden aus Substratmaterial und ermöglichen so eine gerichtete Durchströmung des Quaders mittels eines fluiden Wärmetransfermediums, auch Kältemittel genannt, in oder entgegen der Pfeilrichtung.

Nach einem optionalen Reinigungsschritt mit einem oder mehreren organischen Lösungsmitteln (z. B. mit N-Methylpyrrolidon, Isopropanol, Ethanol oder Aceton), ansonsten aber bevorzugt keinen weiteren Vorbehandlungsschritten, wird das Substrat durch Eintauchen in ein Abscheidungsbad geeigneter Reaktivität autokatalytisch-chemisch mit einem Metall beschichtet. Eine genaue Spezifikation der spezifisch für diesen Anwendungsfall bevorzugten Charakteristika ist weiter unten zu finden. Angestrebte mittlere Schichtdicken befinden sich typischerweise zwischen 3 und 50 µm, idealerweise zwischen 10 und 30 µm. Neben einer einmaligen Beschichtung kann auch eine in zwei getrennten Abscheidungsschritten durchgeführte Beschichtung mit einem oder zwei Metallen vorgenommen werden. Das Flussschema des gesamten Prozesses ist in FIG. 2 zusammengefasst.

Günstige Architekturen nutzen das magnetokalorische Material in maximalen (Wand-)Dicken von ungefähr 1000 µm, idealerweise unterhalb 600 µm, um einen guten Wärmeübertrag aus dem magnetokalorischen Funktionsmaterial zu gewährleisten, weisen für eine leichte Durchströmbarkeit eine ausreichend hohe Porosität und gleichmäßig verteilte, durchgängige, geradlinige und monodisperse Poren mit Durchmessern von etwa 200-1000 µm auf, besitzen aber gleichzeitig einen ausreichend hohen Volumenanteil an magnetokalorischem Material, um eine gute Leistungsdichte bereitzustellen. Hierfür sind globale Porositäten von 10 % bis 60 % anzustreben, idealerweise 20 % bis 55 %. Die Poren müssen keine kreisrunden Querschnitte besitzen, auch andere Querschnitte sind möglich. Insbesondere sind längliche oder schlitzartige Poren zulässig, wenn sie in einer Dimension auf den oben genannten Wert von etwa 200-1000 µm beschränkt sind. Im Querschnitt betrachtet hat man auf einer Fläche von 1 cm² in Flussrichtung vorzugsweise eine Anzahl von vielen 10 bis mehreren 100, insbesondere 100 bis 800 Mikrokanälen, wobei sich die Flächendichte an Poren primär aus der Dimensionierung der Poren und ihrer Verteilung in der magnetokalorischen Matrix ergibt.

Geeignete monolithisch-poröse Substrate für die Beschichtung können zum Beispiel aufbauend durch Stapelung und Verbindung (strukturierter) Platten oder durch 3D-Druck realisiert werden, subtraktiv zum Beispiel durch Wasserstrahlschneiden oder Drahterosion von Massivmaterialien. Diese Angaben sind beispielhaft zu verstehen. Im Rahmen des hier beschriebenen Verfahrens wird die Bereitstellung geeigneter Substrate, vorzugsweise mit chemisch reduzierter oder zumindest nicht merklich oxidierter Oberfläche hoher Qualität, vorausgesetzt. Die Ausführbarkeit ist empirisch belegt, und entsprechende Muster sind kommerziell erhältlich. Details der Herstellung der Ausgangssubstrate sind jedoch nicht Gegenstand der vorliegenden Beschreibung.

Als Abscheidungsbäder sind besonders solche zur Herstellung von Nickel-Phosphor- und Kupferbeschichtungen hervorzuheben. Während Nickel-Phosphor vor allem durch seine hohe Korrosionsresistenz hervorsticht, empfiehlt sich Kupfer aufgrund seiner Plastizität und seiner ausgezeichneten Wärmeleitfähigkeit besonders für das genannte Anwendungsfeld.

Das Nickel-Phosphor-Abscheidungsbad beinhaltet vorzugsweise:
(i) eine Ni(II)-Quelle (vorzugsweise Nickelsulfat), die die für die Metallbeschichtung erforderlichen Präkursorionen bereitstellt (vorzugsweise im Bereich von 0.03-0.4 mol L⁻¹, insbesondere 0.06-0.3 mol L⁻¹)
(ii) Liganden zur Sicherstellung der Löslichkeit der eingesetzten Metallsalze im alkalischen Medium, sowie zur Komplexierung der Ionen und zur Einstellung ihrer Reaktivität (vorzugsweise Citrat oder andere Carbon-, Hydroxycarbon- oder Aminopolycarbonsäuren) (vorzugsweise im Bereich von 0.04-0.55 mol L⁻¹, insbesondere 0.09-0.4 mol L⁻¹)
(iii) Alkalien zur Einstellung eines ausreichend hohen pH-Werts, um die Korrosivität der Lösung gegenüber dem Substrat zu verringern (vorzugsweise Ammoniak (vorzugsweise im Bereich von 0.6-2.4 mol L⁻¹, insbesondere 1.0-2.0 mol L⁻¹) und Ammoniumsalze wie Ammoniumsulfat (vorzugsweise im Bereich von 0.3-1.2 mol L⁻¹, insbesondere 0.5-1.0 mol L⁻¹), besonders bevorzugt Ammoniak ergänzt um ein Ammoniumsalz, um einen Puffer aufzubauen, unter Nachdosierung von Ammoniak, entweder kontinuierlich oder im Batch-Verfahren nach der Hälfte der Reaktionszeit, um den pH-Wert stabil zu halten
(iv) ein ausreichend starkes, katalytisch umsetzbares Reduktionsmittel (vorzugsweise Hypophosphite wie Kalium-, Natrium- oder Ammoniumhypophosphit, aber auch Hydrazin, Borhydrid oder Aminoborane) (vorzugsweise im Bereich von 0.1-0.5 mol L⁻¹, insbesondere 0.2-0.35 mol L⁻¹)
(v) optional, aber dringend empfohlen Stabilisatoren zur Verhinderung homogener Nukleation (zum Beispiel Pb(II)-Salze wie Bleiacetat) (beispielhaft im Bereich von 2-25 ppm, insbesondere 4-9 ppm)
(vi) optional, aber dringend empfohlen oberflächenaktive Verbindungen zur Verbesserung der Benetzbarkeit der Substratoberfläche, zur Beschleunigung der Ablösung von Gasblasen am Substrat, um Abscheidungsinhomogenitäten entgegenzuwirken, und zur Optimierung der Lösungsreaktivität, aber unter Vermeidung der Bildung zu steifer Schäume oder der Ausfällung schwerlöslicher Metallseifen, die die Substratporen verschließen und einer gleichmäßigen Metallisierung entgegenwirken können (vorzugsweise anionische Tenside wie Natrium- oder Kaliumseifen, Organosulfonate und -sulfate, aber auch neutrale Tenside wie Polysorbate) (beispielhaft bis zu 2 mmol L⁻¹, insbesondere 0.01-0.7 mmol L⁻¹)

Das Kupfer-Abscheidungsbad beinhaltet vorzugsweise:
(i) eine Cu(II)-Quelle (vorzugsweise Kupfersulfat), die die für die Metallbeschichtung erforderlichen Präkursorionen bereitstellt (vorzugsweise im Bereich von 0.02-0.2 mol L⁻¹, insbesondere 0.03-0.09 mol L⁻¹)
(ii) Liganden zur Sicherstellung der Löslichkeit der eingesetzten Metallsalze im alkalischen Medium, sowie zur Komplexierung der Ionen und zur Einstellung ihrer Reaktivität (vorzugsweise Tartrat oder andere Carbon-, Hydroxycarbon- oder Aminopolycarbonsäuren) (vorzugsweise im Bereich von 0.06-0.6 mol L⁻¹, insbesondere 0.1-0.3 mol L⁻¹)
(iii) Alkalien zur Einstellung eines ausreichend hohen pH-Werts (vorzugsweise Alkalimetallhydroxide und -carbonate oder deren Mischungen, wie Natriumhydroxid, Kaliumhydroxid oder Natriumcarbonat) (vorzugsweise im Bereich von 0.15-0.6 mol L⁻¹, insbesondere 0.2-0.4 mol L⁻¹)
(iv) ein ausreichend starkes, katalytisch umsetzbares Reduktionsmittel (vorzugsweise Formaldehyd, aber auch Glyoxylsäure und andere Aldehyde) (vorzugsweise im Bereich von 0.15-1.0 mol L⁻¹, insbesondere 0.2-0.5 mol L⁻¹)
(v) optional, aber dringend empfohlen oberflächenaktive Verbindungen zur Verbesserung der Benetzbarkeit der Substratoberfläche, zur Beschleunigung der Ablösung von Gasblasen am Substrat, um Abscheidungsinhomogenitäten entgegenzuwirken, und zur Optimierung der Lösungsreaktivität, aber unter Vermeidung der Bildung zu steifer Schäume oder der Ausfällung schwerlöslicher Metallseifen, die die Substratporen verschließen und einer gleichmäßigen Metallisierung entgegenwirken können (vorzugsweise anionische Tenside wie Natrium- oder Kaliumseifen, Organosulfonate und -sulfate, aber auch neutrale Tenside wie Polysorbate) (beispielhaft bis zu 2 mmol L⁻¹, insbesondere 0.01-0.7 mmol L⁻¹)
(vi) optional, aber dringend empfohlen Additive zur Verbesserung der Duktilität und zur Stabilisierung der Abscheidungslösung (vorzugsweise Cyanide wie Natriumcyanid oder stickstoffbasierte Heterozyklen wie Polypyridine oder Azole) (beispielhaft bis zu 3 mmol L⁻¹, insbesondere 0.02-0.8 mmol L⁻¹)
(vii) optional, aber dringend empfohlen zusätzliche Stabilisatoren zur Verhinderung homogener Nukleation unter Abscheidungsbedingungen (zum Beispiel Oxo-Anionen, Schwefelverbindungen, Heterozyklen) (beispielhaft bis zu 1 mmol L⁻¹)
(viii) optional, aber dringend empfohlen Ni(II)-Salze für die Optimierung der Reaktivität (vorzugsweise Nickelsulfat) (beispielhaft im Bereich von 0.003-0.03 mol L⁻¹, insbesondere 0.006-0.018 mol L⁻¹)

Um die Reaktion einzuleiten, wird das Substrat lediglich in das auf Reaktionstemperatur auf unter 90 °C, idealerweise unterhalb 60 °C erhitzte Abscheidungsbad eingetaucht. Die Abscheidung setzt innerhalb von weniger als 10 Minuten, idealerweise in weniger als 2 Minuten spontan und gleichmäßig auf der gesamten Substratoberfläche ein (angezeigt durch lebhafte Gasentwicklung), kann aber durch Anlegen einer elektrischen Spannung, den elektrischen Kontakt des Substrats mit einem unedleren Metall wie z. B. Aluminium oder durch Kontakt mit metallischem Kupfer zusätzlich angeregt werden. Das Bad wird während dem Aufheizen und der Abscheidung vorzugsweise mit Luftblasen gespült, um es mit Sauerstoff anzureichern und umzuwälzen. Auch das Einblasen von anderen sauerstoffhaltigen Gasen oder von reinem Sauerstoff ist möglich.

Bei der stationären Positionierung der Substrate in der Abscheidungslösung ist bevorzugt auf eine diagonale bis vertikale Anordnung der Poren zu achten, sodass die sich während der Abscheidung bildenden Wasserstoffblasen selbstständig und schnell durch Auftrieb aus den Poren entfernen, was sowohl eine dauerhafte Benetzung der gesamten Substratoberfläche mit Abscheidungslösung (und damit eine gleichmäßige Beschichtung) als auch eine konstante Erneuerung der Abscheidungslösung im Inneren des Substrates sicherstellt. Dies kann z. B. durch seitliches Kippen der Substrate an die Gefäßwand, durch das halbseitige Auflegen auf eine Erhöhung auf dem Gefäßboden, durch die Nutzung eines konkav gekrümmten Gefäßbodens oder durch das Auflegen der Substrate auf ein in der Lösung aufgehängtes Gitter oder ähnliche Halter realisiert werden.

Nach einer der Erzeugung der gewünschten Schichtdicke entsprechenden Abscheidungszeit wird das Substrat aus der Lösung genommen, vorzugsweise gründlich mit Wasser gewaschen, an Luft getrocknet und ist bereit für die Integration in eine Wärmepumpe oder Kühlvorrichtung. Weitere Nachbehandlungsschritte sind vorteilhafterweise nicht erforderlich.

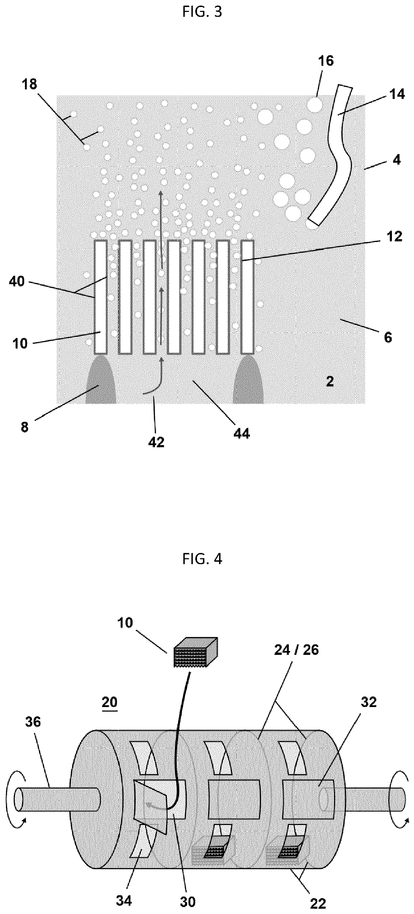

Eine beispielhafte Darstellung der oben beschriebenen Reaktionsführung ist in FIG. 3 gezeigt. Um dauerhaft unzugängliche Kontaktpunkte zwischen zu metallisierendem Substrat und Halter zu vermeiden, die Schwachstellen oder Poren in der Beschichtung hervorrufen können, ist es zudem angebracht, die Proben regelmäßig zu wenden. Idealerweise erfolgt dies automatisiert, unter Wahrung eines möglichst offenen Zugangs zum Abscheidungsbad und unter Verhinderung des Herausfallens von Substraten aus dem Probenhalter. Ebenso zu vermeiden ist das Reiben mehrerer Substrate aneinander sowie eine aus Reibung oder Stößen mit dem sich bewegenden Probenhalter resultierende Schädigung des spröden Substratmaterials oder der Beschichtung, z. B. durch zu harte Oberflächen.

Zusammengefasst zeigt FIG. 3 ein im Rahmen des erfindungsgemäßen Prozesses eingesetztes Abscheidungsbad 2. In einem geeigneten, vorzugsweise von oben zugänglichen und vorzugsweise wannenartigen Gefäß 4 befindet sich eine Abscheidungslösung 6 bzw. -flüssigkeit der oben genannten Art. In dem Gefäß 4 befinden sich ein oder mehrere Halter 8 für das zu beschichtende Substrat 10, welches wie weiter oben beschrieben vorzugsweise ein von parallelen Poren oder (Mikro-)Kanälen 12 durchzogener Monolith aus einem magnetokalorischen Material ist. Das Substrat 10 ist vorzugsweise derart ausgerichtet, dass die Mikrokanäle 12 vertikal ausgerichtet sind. Hier im Beispiel sind die Halter 8 auf dem Boden des Gefäßes 4 gelagert und stützen das eingesetzte bzw. lose aufgelegte Substrat 10 von unten. Durch geeignete Formgebung ist der Kontakt zwischen den Haltern 8 und dem Substrat 10 auf wenige Punktkontakte minimiert. Die Füllstandshöhe der Abscheidungslösung 6 ist derart bemessen, dass das Substrat 10 vollständig in die Abscheidungslösung 6 eintaucht. Durch die gewählte Lagerung ist das Substrat 10 allseitig mit der Abscheidungslösung 6 in Kontakt. Insbesondere sind die Unterseite und die Oberseite des Substrats 10 mit den dort liegenden Ein- bzw. Austrittsöffnungen der Mikrokanäle 12 gut zugänglich. Die Abscheidungslösung 6 ist durch eine hier nicht dargestellte Temperierungsvorrichtung auf eine gewünschte Prozesstemperatur eingestellt.

Durch einen in die Abscheidungslösung 6 eintauchenden Luftschlauch 14 wird an dessen Austrittsöffnung mit Hilfe einer zugeordneten Kompressorpumpe oder dergleichen ein Luftstrom in die Abscheidungslösung 6 eingeleitet. Die auf diese Weise freigesetzten und schlussendlich nach oben steigenden Luftblasen 16 reichern die Abscheidungslösung 6 mit Sauerstoff an und wälzen sie innerhalb des Gefäßes 4 um, besitzen also gewissermaßen die Funktion eines Rührers. Auf diese Weise existiert während des Abscheidungsvorgangs ein durch die Strömungspfeile 42 angedeuteter gerichteter Fluss der Abscheidungslösung 6 von unten nach oben durch die Poren bzw. Mikrokanäle 12 des Substrats 10 hindurch (und entlang der Außenwände). Dadurch wird die gesamte innere und äußere Oberfläche des Substrats 10 inklusive der Porenwände mit einer gleichmäßigen, dünnen Metallbeschichtung 40 überzogen. Bei der autokatalytischen Beschichtungsreaktion freigesetzte Wasserstoffbläschen 18 steigen in den Mikrokanälen 12 nach oben und entweichen an der Oberfläche der Abscheidungslösung 6 in die umgebende Atmosphäre.

Selbstverständlich können in einer entsprechend großen Wanne mit einer Mehrzahl von Haltern auch mehrere Substrate gleichzeitig nebeneinander beschichtet werden. Dabei ist vorzugsweise auf hinreichend große Abstände zwischen den zu beschichteten Werkstücken (Substraten) zu achten, die sich bei der Handhabung nicht berühren sollten.

Eine mögliche abgewandelte Konfiguration ist die individuelle Aufbewahrung der zu beschichtenden Substrate in den kompartimentierten Zellen eines mit Öffnungen versehenen, im Abscheidungsbad rotierenden Zylinders, der aus einem chemisch durch das Bad nicht angegriffenen Material besteht, das zumindest in den mit dem Substrat in Kontakt kommenden Bereichen (Innenwände der Zellen) weich genug ist, um mechanische Schäden an den Substraten durch während der Beschichtung zu verhindern (z. B. silikonbeschichtetes Metall).

Ein derartiger Aufnahmezylinder 20 ist schematisch in FIG. 4 dargestellt. Der Aufnahmezylinder 20 ist als Hohlzylinder mit einer den Innenraum umschließenden Mantelfläche 22 und stirnseitigen Verschlusskappen bzw. Abschlusswänden 24 ausgebildet. Der zylindrische Innenraum ist in Längsrichtung gesehen durch Zwischenwände 26 in einzelne Zellen 28 oder Kompartimente unterteilt, die jeweils für die Aufnahme eines einzelnen Werkstücks (Substrat 10) vorgesehen sind. Für die Einbringung und spätere Entnahme des jeweiligen Monoliths oder Werkstücks ist jede Zelle mit einer Eingriffsöffnung 30 hinreichender Größe versehen, die für den Abscheidungsvorgang durch eine verriegelbare Verschlussklappe 32 verschließbar ist. Dadurch wird ein Herausfallen der Werkstücke während der Beschichtung verhindert. Um eine hinreichende Durchströmung der einzelnen Zellen 28 während der Beschichtung zu gewährleisten, weist die Mantelfläche 22 des Aufnahmezylinders 20 eine Vielzahl von über den Umfang und in Längsrichtung verteilten, beispielsweise schlitzartigen Durchströmöffnungen 34 auf, die so klein gehalten sind, dass die Werkstücke nicht hindurchpassen. An den Stirnseiten ist der Aufnahmezylinder 20 mit einer rotierend im Abscheidungsbad 2 gelagerten und vorzugsweise motorisch angetriebenen Antriebswelle 36 verbunden, so dass der Aufnahmezylinder 20 während des Abscheidungs- bzw. Beschichtungsvorgangs im Abscheidungsbad 2 rotiert werden kann. Die Rotationsachse ist dabei bevorzugt horizontal ausgerichtet, so dass die einzelnen Werkstücke bei nicht zu großer Rotationsgeschwindigkeit gewissermaßen in der unten liegenden Region des Aufnahmezylinders 20 herumpurzeln und dabei ständig gewendet werden.

Durch die direkte autokatalytisch-nasschemische Beschichtung magnetokalorischer Substrate konnte in Versuchen tatsächlich ein wirksamer Korrosionsschutz nachgewiesen werden, beispielsweise durch die in linear-voltametrischen Messungen gemessene Senkung des Korrosionspotentials auf den Wert des Beschichtungsmetalls, was eine ausgezeichnete Defektfreiheit der Beschichtung anzeigt.

Hierzu wird beispielhaft wird auf FIG. 5 verwiesen, die eine diagrammatische Darstellung des an verschiedenen Proben gemessenen Korrosionspotentials zeigt, nämlich eines unbehandelten, hydrogenierten Lanthan-Eisen-Mangan-Silicium-Legierungssubstrats, eines solchen Substrats, das entsprechend der vorliegenden Erfindung verkupfert worden ist, sowie einer reinen Cu-Referenzprobe. Messtechnische Grundlage ist hierfür ein Drei-Elektroden-Aufbau mit einem platinierten Ti-Netz als Gegenelektrode, verschiedenen Metallplättchen als Arbeitselektrode, und einer Quecksilber-Quecksilbersulfat-Referenzelektrode. Weitere Parameter sind: Elektrolyt: hochreines (>18.2 MΩ cm) Wasser, versetzt mit 100 mM TRIS-Puffer und 20 mM Citronensäure; Vorschubgeschwindigkeit: 0.25 mV / s; Steuerung mittels eines Gamry Reference 600 Potentiostaten.

Auch komplex geformte magnetokalorische Werkstücke wie die oben genannten Mikrokanal-Monolithe konnten mit den entwickelten Abscheidungsreaktionen einfach, zuverlässig, schnell und gleichmäßig mit skalierbaren, materialschonenden und auf günstigen Basischemikalien aufbauenden Prozessen metallisiert werden.

Die hohe Qualität des abgeschiedenen Metallfilms wurde auch durch Rasterelektronenmikroskopie nachgewiesen (siehe FIG. 6 und 7), genauso wie die erfolgreiche, homogene und deckende Metallisierung der inneren Oberflächen von Mikrokanal-Monolithen.

Alle Abscheidungs- und Verarbeitungsschritte laufen tatsächlich bei vergleichsweise niedrigen Temperaturen ab. Stärker thermisch aktivierte Methoden zur Abscheidung (z. B. chemische oder physikalische Gasphasensynthesen, Eintauchen in Metallschmelzen) oder zur Steigerung der Beschichtungsqualität (z. B. die Verbesserung der Schichtanhaftung, die Sinterung einer Beschichtung oder der Abbau von Spannungen durch thermische Behandlung), die nicht ohne Weiteres auf temperaturempfindliche magnetokalorische Substrate angewandt werden können, sind nicht erforderlich.

Die mechanische Zähigkeit des Kupferfilms wurde in Bruchversuchen untersucht, in denen eine Zunahme der mechanischen Stabilität und der Bruchresistenz der intrinsisch spröden magnetokalorischen Monolithe durch die Metallbeschichtungen nachgewiesen wurde.

Die verbesserte Qualität metallisierter magnetokalorischer Mikrokanal-Substrate in Bezug auf Beschichtungshomogenität, -defektfreiheit und Korrosionsschutz durch die Vermeidung aggressiver Prozessschritte wurde ebenfalls nachgewiesen: Der Einbezug ansonsten üblicher Vorbehandlungsmethoden wie das Anätzen der Substratoberfläche mit verdünnten Säuren (z. B. Salz- oder Schwefelsäure) oder das Eintauchen in Sensibilisierungs- und Aktivierungslösungen (z. B. salzsauren Lösungen von SnCl₂ oder PdCl₂), die für die Vorbereitung chemischer Metallisierungen üblich sind, führte im Gegensatz zur hier vorgeschlagenen direkten Metallisierung zu einer verschlechterten Anhaftung der Metallfilme und erzeugte sichtbare und merkliche Korrosionsspuren. Die Notwendigkeit zur Aufbringung eines Katalysators erübrigt sich im vorliegenden Fall aufgrund des spontanen Anspringens der Reaktion beim Eintauchen des Substrats in die Abscheidungslösungen.

### Bezugszeichenliste

- 2: Abscheidungsbad
- 4: Gefäß
- 6: Reaktions- bzw. Abscheidungslösung
- 8: Halter
- 10: Substrat
- 12: (Mikro-) Kanal
- 14: Luftschlauch
- 16: Luftblasen
- 18: Wasserstoffbläschen
- 20: Aufnahmezylinder
- 22: Mantelfläche
- 24: Abschlusswand
- 26: Zwischenwand
- 28: Zelle
- 30: Eingriffsöffnung
- 32: Verschlussklappe
- 34: Durchströmöffnung
- 36: Antriebswelle
- 40: Metallbeschichtung
- 42: Strömungspfeil
- 44: unterströmter Bereich

## Patentansprüche

1. Verfahren zum Herstellen eines magnetokalorischen Wärmetauscherelements umfassend folgende Schritte:
• Bereitstellen eines magnetokalorischen Substrats (10) mit einer Mehrzahl von Poren, die durchgängige Kanäle (12) bilden,
• Eintauchen des Substrats (10) in eine temperierte wässrige Reaktionslösung (6), die zu einer autokatalytisch-chemischen Abscheidung einer Metallbeschichtung (40) auf der Oberfläche des Substrats (10) führt.

2. Verfahren nach Anspruch 1, wobei das Substrat (10) monolithisch und vorzugsweise gleichmäßig von durchgängigen Poren durchzogen ist.

3. Verfahren nach Anspruch 1 oder 2, wobei die Poren einen Durchmesser zwischen 200 und 1000 µm aufweisen, vorzugsweise monodispers sind und entlang ihres Verlaufs bevorzugt einen konstanten Durchmesser aufweisen, und/oder wobei zwischen den Poren Wände ausgebildet sind, deren Wanddicke weniger als 1000 µm, vorzugsweise weniger als 600 µm, beträgt.

4. Verfahren nach einem der vorangehenden Ansprüche, wobei der Volumenanteil der Poren des Substrats (10) im Bereich von 10 bis 60 %, vorzugsweise von 20 bis 55 %, des Gesamtvolumens liegt.

5. Verfahren nach einem der vorangehenden Ansprüche, wobei das Substrat (10) eine Heusler-Legierung, eine magnetokalorische Verbindung eines Eisenphosphid-Typs oder eine Lanthan-Eisen-Silicium-basierte Legierung, insbesondere eine hydrogenierte Lanthan-Eisen-Silicium-Mangan-Legierung, ist.

6. Verfahren nach einem der vorangehenden Ansprüche, wobei die Reaktionslösung (6) eine Temperatur im Bereich von 20 bis 90 °C, vorzugsweise von weniger als 60 °C, aufweist.

7. Verfahren nach einem der vorangehenden Ansprüche, wobei die gesamte Oberfläche des Substrats (10), insbesondere die im Inneren liegenden Oberflächen der Porenwände, während des Abscheidungsvorgangs ständig in Kontakt mit frischer Reaktionslösung (6) steht, realisiert durch die Durchströmung der Poren mit der Reaktionslösung (6), und wobei das Substrat (10) während des Abscheidungsvorgangs zumindest zeitweilig, vorzugsweise die meiste Zeit, derart ausgerichtet wird, dass sich bei der Abscheidung bildende Wasserstoffblasen (18) selbstständig aus den Poren entfernen.

8. Verfahren nach einem der vorangehenden Ansprüche, wobei die Reaktionslösung (6) als Nickel-Phosphor-Abscheidungsbad wirksam ist.

9. Verfahren nach Anspruch 8, wobei die Reaktionslösung (6) folgende Inhaltsstoffe umfasst:
• eine Ni(II)-Quelle, vorzugsweise Nickelsulfat
• Liganden, vorzugsweise Citrat und/oder andere Carbon-, Hydroxycarbon- oder Aminopolycarbonsäuren, bevorzugt in einem Molaritätsverhältnis von etwa 6:1 bis 10:1, gemessen in auf die vom Liganden bereitgestellt Anzahl an Ni(II)-Bindungsstellen, bezogen auf Ni(II)
• Alkalien, vorzugsweise Ammoniak und/oder Ammoniumsalze wie Ammoniumsulfat, besonders bevorzugt Ammoniak ergänzt um ein Ammoniumsalz
• ein katalytisch umsetzbares Reduktionsmittel, vorzugsweise Hypophosphite wie Kalium-, Natrium- und/oder Ammoniumhypophosphit, und/oder Hydrazin, Borhydrid und/oder Aminoborane, bevorzugt in einem Molaritätsverhältnis von etwa 2:1 bis 3:1, bezogen auf Ni(II)
• optional Stabilisatoren, vorzugsweise Pb(II)-Salze wie Bleiacetat
• optional oberflächenaktive Verbindungen, vorzugsweise anionische Tenside wie Natrium- und/oder Kaliumseifen, Organosulfonate und/oder -sulfate, und/oder neutrale Tenside wie Polysorbate

10. Verfahren nach einem der Ansprüche 1 bis 7, wobei die Reaktionslösung (6) als Kupfer-Abscheidungsbad wirksam ist.

11. Verfahren nach Anspruch 10, wobei die Reaktionslösung (6) folgende Inhaltsstoffe umfasst:
• eine Cu(II)-Quelle, vorzugsweise Kupfersulfat
• Liganden, vorzugsweise Tartrat und/oder andere Carbon-, Hydroxycarbon- oder Aminopolycarbonsäuren, bevorzugt in einem Molaritätsverhältnis von etwa 5:1 bis 10:1, gemessen in auf die vom Liganden bereitgestellte Anzahl an Cu(II)-Bindungsstellen, bezogen auf Cu(II)
• Alkalien, vorzugsweise Alkalimetallhydroxide und -carbonate oder deren Mischungen, wie Natriumhydroxid, Kaliumhydroxid oder Natriumcarbonat
• ein katalytisch umsetzbares Reduktionsmittel, vorzugsweise Formaldehyd, und/oder Glyoxylsäure und andere Aldehyde, bevorzugt in einem Molaritätsverhältnis von etwa 2:1 bis 3:1, bezogen auf die für die vollständige Reduktion des Cu(II) benötigte Zahl an molaren Äquivalenten
• optional oberflächenaktive Verbindungen, vorzugsweise anionische Tenside wie Natrium- oder Kaliumseifen, Organosulfonate und/oder -sulfate, und/oder neutrale Tenside wie Polysorbate
• optional Additive, vorzugsweise Cyanide wie Natriumcyanid und/oder stickstoffbasierte Heterozyklen wie Polypyridine und/oder Azole
• optional Stabilisatoren, vorzugsweise Oxo-Anionen, Schwefelverbindungen und/oder Heterozyklen
• optional Ni(II)-Salze, vorzugsweise Nickelsulfat, bevorzugt in einem Molaritätsverhältnis von etwa 1:4 bis 1:8, bezogen auf Cu(II)

12. Verfahren nach einem der vorangehenden Ansprüche, wobei die Metallabscheidung auf dem Substrat (10) spontan, insbesondere ohne vorige Einbringung katalytisch aktiver Komponenten wie zum Beispiel Palladium-Partikel, im Submikrometerbereich gleichmäßig deckend und innerhalb von weniger als 10 Minuten, vorzugsweise innerhalb weniger als 2 Minuten, einsetzt.

13. Verfahren nach einem der vorangehenden Ansprüche, wobei das beschichtete Substrat (10) nach dem Abscheidungsvorgang und ggf. nach dem Abwaschen und Trocknen in ein zweites temperiertes Abscheidungsbad mit einer zweiten autokatalytisch-chemischen Reaktionslösung eingetaucht wird zur Ausbildung einer zweiten Metallbeschichtung auf der Oberfläche der zuvor erhaltenen Metallbeschichtung.

14. Magnetokalorisches Wärmetauscherelement, hergestellt nach einem Verfahren gemäß einem der vorangehenden Ansprüche.

15. Wärmepumpe oder Kühl- oder Heizvorrichtung mit einem Wärmetauscherelement gemäß Anspruch 14.
